# EUROPÄISCHE PATENTSCHRIFT

(11) **EP 3 143 170 B1**
(45) Veröffentlichungstag und Bekanntmachung des Hinweises auf die Patenterteilung: **31.07.2019**
(21) Anmeldenummer: 15725263.6
(22) Anmeldetag: 13.05.2015
(51) Int. Cl.: C22C 9/04, C22F 1/08, F16C 33/00, F16C 33/12

(54) **SONDERMESSINGLEGIERUNG UND LEGIERUNGSPRODUKT**
HIGH-TENSILE BRASS ALLOY AND ALLOY PRODUCT
ALLIAGE DE LAITON À HAUTE RÉSISTANCE ET PRODUIT D'ALLIAGE

(30) Priorität: 16.05.2014 DE 102014106933
(43) Veröffentlichungstag der Anmeldung: 22.03.2017
(60) Teilanmeldung: 17177780.8
(73) Patentinhaber: Otto Fuchs KG, 58540 Meinerzhagen (DE)
(72) Erfinder: PLETT, Thomas, 57392 Schmallenberg (DE); GUMMERT, Hermann, 41751 Viersen (DE); REETZ, Björn, 47800 Krefeld (DE)
(74) Vertreter: Haverkamp, Jens
(86) Internationale Anmeldenummer: PCT/EP2015/060566
(87) Internationale Veröffentlichungsnummer: WO 2015/173291

(56) Entgegenhaltungen:
- US-A1- 2009 022 620
- US-A1- 2012 020 600

## Beschreibung

Die Erfindung betrifft eine Sondermessinglegierung und ein Produkt aus einer Sondermessinglegierung, das einer Reibbelastung unterliegt.

Für typische Reibanwendungen in einer Schmiermittelumgebung werden generell niedrige Reibwerte der verwendeten Legierung gefordert, wobei zusätzlich der Reibwert in vorgegebenen Grenzen an die jeweilige Anwendung, insbesondere den Reibpartner, den verwendeten Schmierstoff und die Reibbedingungen, wie Anpressdruck und Relativgeschwindigkeit, anpassbar sein sollte. Dies gilt insbesondere für Kolbenbuchsen, auf die hohe statische und dynamische Lasten wirken. Des Weiteren fordern Anwendungen mit hohen Relativgeschwindigkeiten der Reibpartner, wie sie beispielsweise für Axiallager eines Turboladers vorliegen, Legierungen, die neben einer reduzierten Wärmeentwicklung auch eine gute Wärmeableitung von der Reibfläche sicherstellen.

Durch die Reibleistung und den Ölkontakt entsteht auf der Lagerfläche eine tribologische Schicht mit angelagerten Schmiermittelkomponenten. Dabei wird eine gleichmäßige und zugleich hohe Anlagerungsrate der Schmiermittelbestandteile und deren Abbauprodukte gefordert, um an der Gleitschicht eine hinreichend stabile Adsorptionsschicht zu erhalten.

Ferner zeichnet sich ein geeigneter Lagerwerkstoff zusätzlich durch eine breitbandige Ölverträglichkeit aus, sodass der Aufbau der tribologischen Schicht weitgehend unempfindlich gegen die Wahl bestimmter Öladditive ist. Eine weitere Zielsetzung besteht darin, eine Legierung für Reibanwendungen mit guten Notlaufeigenschaften anzugeben, sodass eine hinreichende Standzeit unter Trockenreibungsbedingungen sichergestellt werden kann.

Für reibbelastete Bauteile ist zusätzlich wichtig, dass die eingesetzte Legierung eine hinreichende Festigkeit aufweist. Entsprechend sollte eine hohe 0,2 %-Dehngrenze vorliegen, um die unter Last auftretenden plastischen Verformungen möglichst gering zu halten. Zusätzlich wird gefordert, eine besonders harte und zugfeste Legierung anzugeben, um deren Widerstand gegen abrasive und adhäsive Belastungen zu erhöhen. Zugleich wird eine ausreichende Zähigkeit als Schutz gegen stoßende Beanspruchungen verlangt. In diesem Zusammenhang wird gefordert, die Anzahl der Mikrodefekte zu verringern und das von diesen ausgehende Defektwachstum zu verlangsamen. Dies geht einher mit der Forderung, eine Legierung mit einer möglichst hohen Bruchzähigkeit anzugeben, die weitgehend frei von Eigenspannungen ist.

Geeignete Legierungen für reibbeanspruchte Bauteile sind vielfach Sondermessinge, die neben Kupfer und Zink als Hauptbestandteile eine Zulegierung wenigstens eines der Elemente Nickel, Eisen, Mangan, Aluminium, Silizium, Titan oder Chrom aufweisen. Dabei erfüllen insbesondere Siliziummessinge die voranstehend genannten Anforderungen, wobei CuZn31Si1 eine Standardlegierung für Reibanwendungen, etwa für Kolbenbuchsen, darstellt. Ferner ist bekannt, Zinnbronzen, die neben Zinn und Kupfer zusätzlich Nickel, Zink, Eisen und Mangan aufweisen, für Reibanwendung oder auch für den Bergbau einzusetzen.

Als Beispiel für eine Kupfer-Zink-Legierung, die sich für auf Gleitung beanspruchte Maschinenteile, wie Lager, Schneckenräder, Zahnräder, Gleitschuhe und dergleichen, eignet, wird auf CH 223 580 A verwiesen. Offenbart wird ein Kupfergehalt von 50 - 70 Gew.-% mit einer Zulegierung von 2 - 8 Gew.-% Aluminium, 0,05 - 3 % Silizium und 0,5 - 10 Gew.-% Mangan sowie Rest Zink. Zusätzlich kann die Legierung bis maximal 10 Gew.-% Blei sowie 0,1 - 5 Gew.-% eines oder mehrerer Elemente aus der Gruppe Eisen, Nickel und Kobalt aufweisen. Des Weiteren ist aus der EP 0 407 596 B1 eine Sondermessinglegierung bekannt, die neben Kupfer, Zink, Mangan, Aluminium und Silizium als optionale Legierungsbestandteile Eisen, Nickel und Kobalt aufweist. Zusätzlich wird ein Anteil von 0,03 - 1 Gew.-% Sauerstoff vorgesehen. Des Weiteren offenbart DE 15 58 467 A eine weitere Sondermessinglegierung, die für auf Gleitung und Reibung beanspruchte Gegenstände vorgesehen ist. Neben Kupfer und einem Zinkanteil, der bis 45 Gew.-% reichen darf, liegt eine Zulegierung von Mangan und Silizium sowie Tellur vor. Zusätzlich stellen Fe, Ni, Al und Be weitere optionale Legierungsbestandteile dar. Ferner beschreiben DE 15 58 817 B2 und DE 101 59 949 C1 Kupferlegierungen mit einer breitbandigen Zusammensetzung, die einen verschleißreduzierten Lagerwerkstoff bilden.

Um bestimmte Eigenschaften eines aus einer Sondermessinglegierung hergestellten Produktes zu erreichen, werden Legierungen mit unterschiedlichen Legierungselementen eingesetzt. Für derartige Bauteile ist es somit erforderlich, entsprechend unterschiedliche Produkte zu bevorraten und vor allem auch den Umgang mit diesen unterschiedlichsten Legierungen zu beherrschen.

Aus US 2009/0022620 A1 ist eine Kupfer-Zink-Legierung bestehend aus:
28,0 - 36,0 Gew.-% Zn,
0,5 - 2,3 Gew.-% Si,
1,5 - 2,5 Gew.-% Mn,
0,2 - 3,0 Gew.-% Ni,
0,5 - 1,5 Gew.-% Al,
0,1 - 1,0 Gew.-% Fe,
Wahlelementen mit geringen Anteilen sowie einem Rest an Kupfer nebst unvermeidbaren Verunreinigungen
bekannt.

Kern des Gegenstandes dieser vorbekannten Legierung bzw. einer aus dieser hergestellten Produktes ist die spezielle Ausbildung von Fe-, Ni-, Mn-Siliziden mit Hilfe eines kontinuierlichen oder semikontinuierlichen Extrusionsgussverfahrens. Hierdurch wird eine höhere Verschleißfestigkeit des aus dieser Legierung hergestellten Produktes erreicht. Diese Legierung eignet sich zum Herstellen von Kolbenführungen bei Verbrennungsmaschinen und zum Herstellen von Getriebebauteilen.

US 2012/0020600 A1 offenbart eine hochfeste Sondermessinglegierung für Gleitelemente. Die in den Ausführungsbeispielen beschriebenen Legierungen enthalten
44,71 - 68 Gew.-% Cu,
5,36 - 9,83 Gew.-% Mn,
1,96 -2,93 Gew.-% Ni,
5,25 - 8,99 Gew.-% Al,
0,73 - 2,82 Gew.-% Si,
1,23 - 4,82 Gew.-% Fe,
Rest Zink.

Diese vorbekannte Sondermessinglegierung ist besonders Al-reich, da dieses Element eine Entstehung der β-Phase begünstigt und festigkeitssteigernd ist. Bei Al-Gehalten von weniger als 5 Gew.-% sollen sich die gewünschten Festigkeitseigenschaften nicht mehr einstellen.

Vor diesem Hintergrund liegt der Erfindung die Aufgabe zugrunde, eine Sondermessinglegierung vorzuschlagen, aus der nicht nur Produkte hergestellt werden können, die sich durch eine hohe Festigkeit, einen verbesserten Verschleiß unter Reibbelastung sowie guten Notlaufeigenschaften bei Mangelschmierung auszeichnen.

Die vorstehende Aufgabe wird gelöst durch eine Sondermessinglegierung mit den Merkmalen des Anspruchs 1 sowie durch ein Sondermessinglegierungsprodukt gemäß Anspruch 2.

Diese Legierung verfügt über einen relativ hohen Zn-Gehalt, und zwar vorzugsweise zwischen 20 und 35 Gew.-%. Dieses ist bemerkenswert, da der Cu-Gehalt eng gewählt ist. Um Legierungen mit den jeweils gewünschten unterschiedlichen Eigenschaften bereitzustellen, ist der Anteil des Cu-Äquivalentes relativ groß gewählt, typischerweise zwischen 45 und 65 Gew.-%. Somit erfolgt eine Einstellung der jeweiligen Legierung und damit der Eigenschaften des daraus hergestellten Produktes über eine Variation der am Cu-Äquivalent beteiligten Elemente. Diesbezüglich sind vor allem die Elemente Mn, Ni, Al und Si von Bedeutung. Durch eine Variation der Beteiligung dieser Elemente an der Sondermessinglegierung lassen sich beispielsweise der Anteil der α- und β-Phasen in der Matrix einstellen. So lassen sich Legierungen durch eine entsprechende Variation in diesen Elementen ausbilden, deren Produkte überwiegend eine α-Phase, überwiegend eine β-Phase oder eine Mischung aus beiden Phasen aufweisen. Ebenso lässt sich, ohne das Verarbeitungsverfahren ändern zu müssen, ein Sondermessinglegierungsprodukt mit unterschiedlicher Korngröße durch entsprechende Variationen vor allem dieser Elemente einstellen.

Neben den Hartphasen beeinflussen die Härte und die Zähigkeit der Legierung wesentlich die Eigenschaft der Reibschicht. Dabei zeichnet sich die erfindungsgemäße Legierung durch eine erstaunlich weite Spanne erzielbarer mechanischer Parameter aus, sodass Dehngrenze, Zugfestigkeit, Bruchdehnung, Härte und Zähigkeit verglichen mit bisher für Reibanwendungen eingesetzten Legierungen durch die Wahl der Verarbeitungsprozesse nach dem Legierungsguss in verbessertem Maß unabhängig voneinander einstellbar sind. Ein exakt für die Erfordernisse der Anwendung gewähltes Legierungsprodukt kann durch folgende Verarbeitungsprozesse nach dem Aufschmelzen der erfindungsgemäßen Bestandteile erzielt werden:
- Warmumformung direkt nach dem Legierungsguss, insbesondere Stranggießen, ohne einen weiteren Behandlungsschritt oder ausschließlich gefolgt durch einen abschließenden Glühschritt,
- Strangpressen mit einer direkt nachgeschalteten Kaltumformung gefolgt von einem abschließenden Glühschritt,
- Strangpressen mit nachfolgendem Zwischenglühen vor dem Ausführen einer Kaltumformung und einem abschließenden Glühschritt.

Eine solche Sondermessinglegierung zeichnet sich bei der Verwendung als Lagerwerkstoff durch besonders gute Notlaufeigenschaften aus. Dies wird auf einen großen Flächenanteil intermetallischer Phasen in der Legierung zurückgeführt. Damit liegt an der Reibfläche eine Vielzahl flächig ausgedehnter und eine hohe Abriebfestigkeit aufweisender Auflagepunkte vor, die bis in die Adsorptionsschicht der angelagerten Schmiermittelkomponenten reichen. Zugleich erhöht die erfindungsgemäß vorliegende flächige Ausprägung der intermetallischen Phasen die Festigkeit der sich unter der Adsorptionsschicht bildenden Reaktionsschicht aus Reaktionsprodukten der Adsorptionsschichtkomponenten und oberflächennahen Legierungsbestandteilen. Dabei verringert sich aufgrund des hohen Flächenanteils der intermetallischen Phasen die Ausbrechneigung einzelner Hartphasenpartikel und damit verbundene Kerbwirkung. Insgesamt resultiert ein Lagermaterial mit einem hohen Verschleißwiderstand.

Des Weiteren zeichnet sich diese Legierung durch besonders vorteilhafte mechanische Eigenschaften aus. Kennzeichnend sind große Härte, eine hohe Dehngrenze und eine hohe Zugfestigkeit bei einer ebenfalls vorteilhaft hohen Bruchdehnung, die auch bei einem nachfolgenden Glühen auf relativ hohen Werten gehalten werden können. Ferner hat sich gezeigt, dass die mechanischen Werte durch einen Warmumformungsschritt im Anschluss an den Legierungsguss sowie durch die Verfahrensführung einer anschließenden Wärmebehandlung einstellbar sind. Demnach resultieren die vorteilhaften mechanischen Werte direkt aus dem Strangpressen zur Ausführung der Warmumformung und einem nachfolgenden Glühen für den Wärmebehandlungsschritt ohne dass eine weitere Legierungsverfestigung durch eine Kaltumformung ausgeführt werden muss.

Ein besonderer Vorteil der Legierungszusammensetzung gemäß dieser Ausführung ist ein Strangpresszustand mit einer dominanten β-Phase. Demnach wird durch ein abschließendes Glühen direkt im Anschluss an die Prozessfolge Schmelzen und Warmumformen, die zum Strangpresszustand führt, das Verhältnis zwischen α-Phase und β-Phase eingestellt, sodass die mechanischen Eigenschaften in einem weiten Bereich anpassbar sind. Durch eine Erhöhung des Anteils der duktileren α-Phase kann die Einbettfähigkeit von Fremdpartikeln in die Reibschicht des resultierenden Legierungsprodukts erhöht werden, sodass in Abstimmung auf die im gegebenen Anwendungsfall vorliegende Schmiermittelumgebung ein Stabilisierung der Adsorptionsschicht auf der Reibfläche bewirkt wird. Dieses gelingt in besonderem Maße, da die relativ weicheren α-Phasen auf den Korngrenzen der diesbezüglich relativ harten β-Phase sitzen. Die besondere Einbettfähigkeit von Fremdpartikeln in den relativ weichen α-Phasen bewirkt aufgrund der Einbettung von Fremdpartikeln, dass diese aus dem tribologischen Kreislauf, in dem ein solches Bauteil eingesetzt wird, herausgeholt werden. Dadurch ist der Verschleiß an anderen Bauteilen, die in diesem tribologischen System neben einem Bauteil aus dieser Legierung beteiligt sind, reduziert.

Die sich bei dieser Sondermessinglegierung ausbildenden Silizide sind von rundlicher Natur, sodass auf diese nur eine geringe Kerbwirkung wirkt. Die sich einstellende Korngröße liegt typischerweise bei etwa 10 bis 20 µm und ist somit als sehr feinkörnig anzusprechen.

Im Folgenden wird die Erfindung unter Bezugnahme auf die Figuren erläutert. Es zeigen:
- **Fig. 1:**: eine lichtmikroskopische Aufnahme des Strangpresszustands der erfindungsgemäßen Sondermessinglegierung im Querschliff mit 100-facher Vergrößerung,
- **Fig. 2:**: den Strangpresszustand aus Figur 1 als lichtmikroskopische Aufnahme mit 500-facher Vergrößerung,
- **Fig. 3:**: eine lichtmikroskopische Aufnahme des erfindungsgemäßen Sondermessings nach einem Weichglühen bei 450°C im Querschliff mit 50-facher Vergrößerung,
- **Fig. 4:**: eine lichtmikroskopische Aufnahme des Weichglühzustands des erfindungsgemäßen Sondermessings aus Figur 3 im Querschliff mit 500-facher Vergrößerung und
- **Fig. 5, 6:**: rasterelektronenmikroskopische Aufnahmen mit Sekundärelektronenkontrast des erfindungsgemäßen Sondermessings im Strangpresszustand bei 6000-facher Vergrößerung.

Im Gusszustand liegen im erfindungsgemäßen Sondermessing intermetallische Phasen (IMP) vor, die in ein feines Messingmatrixgefüge eingebettet sind. Ferner weist das Gussgefüge weder im Querschnitt noch über den Längsverlauf der Gießstange eine wesentliche Gefügevariation auf. Die chemische Zusammensetzung der Sondermessinglegierung gemäß dieser Ausführungsform ist wie folgt (Angaben in Gew.-%):

| **Cu** | **Zn** | **Pb** | **Sn** | **Fe** | **Mn** | **Ni** | **Al** | **Si** | **As** | **Sb** | **P** | **Cr** |
|---|---|---|---|---|---|---|---|---|---|---|---|---|
| 61,0 | Rest | 0,005 | 0,005 | 1,0 | 5,9 | 4,5 | 5,0 | 1,5 | 0,02 | - | 0,005 | 0,03 |

Der für diese Ausführung des erfindungsgemäßen Sondermessings relativ hochgewählte Aluminiumgehalt unterdrückt die Umwandlung der β-Phase zur α-Phase während der Abkühlung der Legierung im Gusszustand, sodass trotz des relativ hoch gewählten Zinkanteils keine α-/β-Mischphase, sondern eine dominante β-Phase entsteht.

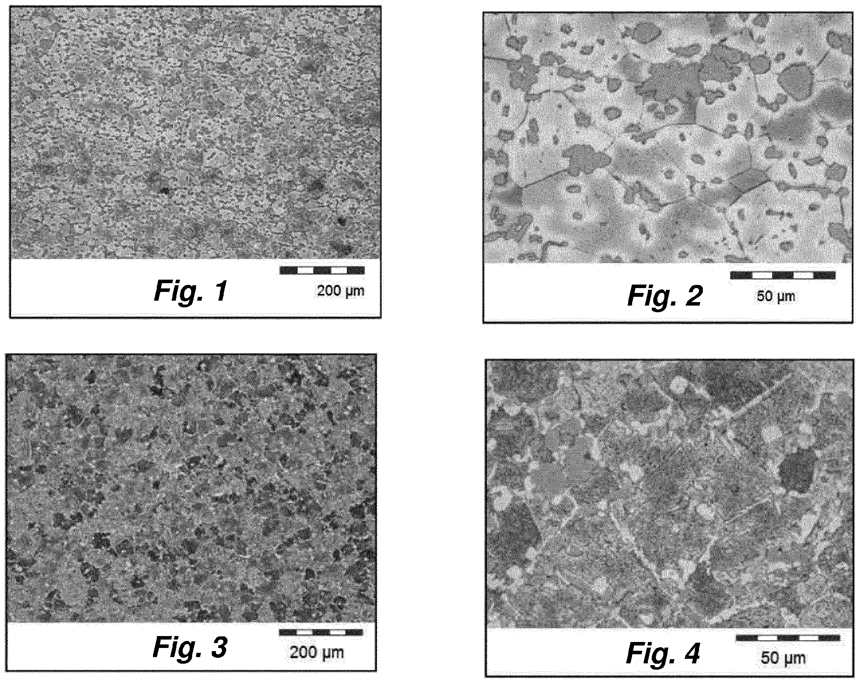

Durch das an den Guss anschließende Strangpressen wird ein Strangpresszustand erzielt, der als lichtmikroskopische Aufnahmen mit 100-fach und 500-fach Vergrößerungen von Querschliffen in der Figuren 1 bis 2 gezeigt ist. Das gegenüber dem Guss wesentlich verfeinerte Gefüge weist eine Matrix mit einer einheitlichen β-Phase auf, in die intermetallische Phasen, die sich in zwei mittlere Größen aufteilen, eingelagert sind. Die größeren intermetallischen Phasen liegen sowohl an den Korngrenzen als auch im Innern der Körner vor, während die kleineren intermetallischen Phasen ausschließlich an den Korngrenzen zu finden sind. Aus im Einzelnen nicht dargestellten Längsschliffen konnte ermittelt werden, dass sowohl die Messingmatrix als auch die intermetallischen Phasen nur eine relativ schwache Ausrichtung in Strangpressrichtung aufweisen.

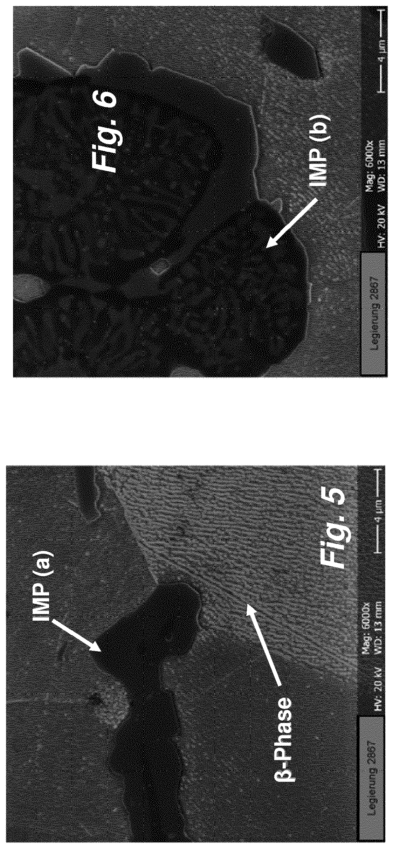

Die Legierung wurde im Strangpresszustand durch rasterelektronenmikroskopische Aufnahmen und EDX-Analysen charakterisiert. Figuren 5 und 6 zeigen exemplarisch rasterelektronenmikroskopische Bilder mit Sekundärelektronenkontrast bei 6000-facher Vergrößerung, wobei die dunkelkontrastierten Bereich flächige intermetallische Phasen mit zwei unterschiedlichen mittleren Größen nachweisen. Die EDX-Messungen haben für die chemische Zusammensetzung der intermetallischen Phasen (Fe, Mn, Ni)-Mischsilizide und überwiegend Mangan-Mischsiliziden Mn₅Si₃, Mn₅Si₂, Mn₆Si oder Mn_{44,1}Si_{8,9} ergeben.

Das Strangpressprodukt der erfindungsgemäßen Sondermessinglegierung kann zur Einstellung der mechanischen Eigenschaften einer Wärmebehandlung in Form eines Weichglühens bei einer Temperatur von 450°C unterzogen werden, wobei ein maximaler α-Phasenanteil von 14 % erzielbar ist. Niedrigere und höhere Glühtemperaturen zeigen eine verringerte Löslichkeit der α-Phase. Des Weiteren wurde gefunden, dass die sich beim Weichglühen 450°C bildende α-Phase vorwiegend an den Korngrenzen vorliegt.

Bezüglich der mechanischen Eigenschaften weist dieses Sondermessing im Strangpresszustand eine 0,2%-Dehngrenze von 760 - 810 MPa, eine Zugfestigkeit Rₘ von 780 - 920 MPa und eine Bruchdehnung von 1,5 - 3% auf. In Abhängigkeit der gewählten Temperaturführung beim Glühen und einem optionalen Endglühen, kann eine Anpassung an die geforderten mechanischen Eigenschaften eines Sondermessingprodukts vorgenommen werden. Dabei erreicht die Sondermessinglegierung gemäß der ersten Ausführung im Legierungsendzustand, der ohne eine an die Wärmebehandlung anschließende Kaltumformung eingestellt wird, eine hohe mechanische Festigkeit.

## Patentansprüche

1. Sondermessinglegierung, **dadurch gekennzeichnet, dass** diese 60 - 62 Gew.-% Cu;
5,8 - 6,2 Gew.-% Mn;
4,3 - 4,7 Gew.-% Ni;
4,9 - 5,1 Gew.-% Al;
1,3 - 1,7 Gew.-% Si;
0,9 - 1,1 Gew.-% Fe;
≤ 0,1 Gew.-% Sn;
≤ 0,1 Gew.-% Pb;
und Rest Zn nebst unvermeidbaren Verunreinigungen enthält.

2. Sondermessinglegierungsprodukt mit einer Legierungszusammensetzung mit
58 - 64 Gew.-% Cu;
5 - 7 Gew.-% Mn;
3 - 5 Gew.-% Ni;
4 - 5,1 Gew.-% Al;
0,5 - 2,5 Gew.-% Si;
0,1 - 1,5 Gew.-% Fe;
≤ 0,3 Gew.-% Sn;
≤ 0,5 Gew.-% Pb;
und Rest Zn nebst unvermeidbaren Verunreinigungen,
**dadurch gekennzeichnet, dass** das Sondermessinglegierungsprodukt durch Warmumformung und Glühen so eingestellt wird, dass die 0,2 %-Dehngrenze R_{P0,2} im Bereich von 760 - 810 MPa, die Zugfestigkeit Rₘ im Bereich von 780 - 920 MPa und die Bruchdehnung As im Bereich von 1 - 8 % vorzugsweise im Bereich von 1,5 - 3% liegen.

3. Sondermessinglegierungsprodukt nach Anspruch 2, **dadurch gekennzeichnet, dass** die Legierungszusammensetzung wie folgt ist: 60 - 62 Gew.-% Cu;
5,8 - 6,2 Gew.-% Mn;
4,3 - 4,7 Gew.-% Ni;
4,9 - 5,1 Gew.-% Al;
1,3 - 1,7 Gew.-% Si;
0,9 - 1,1 Gew.-% Fe;
≤ 0,1 Gew.-% Sn;
≤ 0,1 Gew.-% Pb;
und Rest Zn nebst unvermeidbaren Verunreinigungen enthält.

4. Sondermessinglegierungsprodukt nach Anspruch 2 oder 3, **dadurch gekennzeichnet, dass** das Sondermessinglegierungsprodukt ein auf eine zeitlich variable Reibbelastung ausgelegtes Bauteil ist, insbesondere eine Lagerbuchse, ein Gleitschuh, ein Schneckenrad oder ein Axiallager für einen Turbolader.

## Claims

1. High-tensile brass alloy, **characterised in that** it consists of 60-62 wt % Cu;
5.8-6.2 wt.% Mn;
4.3-4.7 wt.% Ni;
4.9-5.1 wt.% Al;
1.3-1.7wt.% Si;
0.9-1.1 wt.% Fe;
≤ 0.1 wt.% Sn;
≤ 0.1 wt.% Pb;
and the remainder being Zn together with unavoidable impurities.

2. High-tensile brass alloy product with an alloy composition with 58-64 wt.% Cu;
5-7 wt.% Mn;
3-5 wt.% Ni;
4-5.1 wt.% Al;
0.5-2.5 wt.% Si;
0.1-1.5 wt.% Fe;
≤ 0.3 wt.% Sn;
≤ 0.5 wt.% Pb;
and the remainder being Zn together with unavoidable impurities,
**characterised in that** the high-tensile brass alloy product is adjusted by heat forming and annealing in such a way that the 0.2% permanent limit of elongation R_{P0.2} lies in the range from 760-810 MPa, the tensile strength Rₘ in the range from 780-920 MPa, and the elongation after fracture As in the range from 1-8%, and preferably in the range from 1.5-3%.

3. High-tensile brass alloy product according to claim 2, **characterised in that** the alloy composition is as follows:
60-62 wt.% Cu;
5.8-6.2 wt.% Mn;
4.3-4.7 wt.% Ni;
4-9-5.1 wt.% Al;
1.3-1.7wt.% Si;
0.9-1.1 wt.% Fe;
≤ 0.1 wt.% Sn;
≤ 0.1 wt.% Pb;
and the remainder being Zn together with unavoidable impurities,

4. High-tensile brass alloy product according to claim 2 or 3, **characterised in that** the high-tensile brass alloy product is a component part which is configured to have a time-variable frictional load, in particular a bearing bushing, a slide shoe, a worm conveyor wheel, or an axial bearing for a turbocharger.

## Revendications

1. Alliage de laiton haute résistance, **caractérisé en ce que** celui-ci contient
60 à 62 % de poids de Cu ;
5,8 à 6,2 % de poids de Mn ;
4,3 à 4,7 % de poids de Ni ;
4,9 à 5,1 % de poids d'Al ;
1,3 à 1,7 % de poids de Si ;
0,9 à 1,1 % de poids de Fe ;
≤ 0,1 % de poids de Sn ;
≤ 0,1 % de poids de Pb ;
et le reste en Zn auxquels s'ajoutent les inévitables impuretés.

2. Produit d'alliage de laiton haute résistance avec une composition d'alliage qui contient
58 à 64 % de poids de Cu ;
5 à 7 % de poids de Mn ;
3 à 5 % de poids de Ni ;
4 à 5,1 % de poids d'Al ;
0,5 à 2,5 % de poids de Si ;
0,1 à 1,5 % de poids de Fe ;
≤ 0,3 % de poids de Sn ;
≤ 0,5 % de poids de Pb ;
et le reste en Zn auxquels s'ajoutent les inévitables impuretés,
**caractérisé en ce que** le produit d'alliage de laiton haute résistance est traité par déformation à chaud et par recuit de sorte que la limite d'élasticité à 0,2 % R_{P0,2} se situe dans une plage de 760 à 810 MPa, la résistance à la traction Rₘ dans une plage de 780 à 920 MPa et l'allongement à la rupture As, dans une plage de 1 à 8 %, et dans une plage privilégiée de 1,5 à 3 %

3. Produit d'alliage en laiton haute résistance selon la revendication 2, **caractérisé en ce que** la composition de l'alliage est la suivante : 60 à 62 % de poids de Cu ;
5,8 à 6,2 % de poids de Mn ;
4,3 à 4,7 % de poids de Ni ;
4,9 à 5,1 % de poids d'Al ;
1,3 à 1,7 % de poids de Si ;
0,9 à 1,1 % de poids de Fe ;
≤ 0,1 % de poids de Sn ;
≤ 0,1 % de poids de Pb ;
et le reste en Zn auxquels s'ajoutent les inévitables impuretés.

4. Produit d'alliage en laiton haute résistance selon la revendication 2 ou 3, **caractérisé en ce que** le produit d'alliage en laiton haute résistance est une pièce soumise à une charge de friction variable dans le temps, notamment un manchon de palier, un patin, une roue hélicoïdale ou un palier de butée pour un turbocompresseur.
